# EUROPÄISCHE PATENTSCHRIFT

(11) **EP 1 883 737 B1**
(45) Veröffentlichungstag und Bekanntmachung des Hinweises auf die Patenterteilung: **06.03.2013**
(21) Anmeldenummer: 06755144.0
(22) Anmeldetag: 11.05.2006
(51) Int. Cl.: E04B 2/70, E04F 13/08

(54) **WANDAUFBAU BEI EINEM GEBÄUDE**
BUILDING WALL STRUCTURE
STRUCTURE DE MUR POUR BATIMENT

(30) Priorität: 19.05.2005 DE 202005007886 U
(43) Veröffentlichungstag der Anmeldung: 06.02.2008
(73) Patentinhaber: SFS intec Holding AG, 9435 Heerbrugg (CH)
(72) Erfinder: SIEBER, Dominik, 9443 Widnau (CH)
(86) Internationale Anmeldenummer: PCT/EP2006/062231
(87) Internationale Veröffentlichungsnummer: WO 2006/122902

(56) Entgegenhaltungen:
- EP-A1- 1 512 875
- DE-A1- 4 401 908
- DE-A1- 19 703 874
- DE-U1- 29 516 664
- DE-U1- 29 805 784

## Beschreibung

Die Erfindung betrifft einen Wandaufbau für ein Gebäude, wobei bei dem Wandaufbau vorgehängte Wandteile in Form von Latten, Brettern od.dgl. über Befestiger mit dem festen, das eigentliche Wandelement bildenden Unterbau verbunden sind und wobei an den vorgehängten Wandteilen Außenverkleidungselemente befestigbar sind, wobei wenigstens ein Teil der Befestiger spitzwinklig zu einer Horizontalebene eingesetzt sind, wobei die vorgehängten Wandteile zusammen mit den Befestigern und zusammen mit dem Unterbau jeweils über Zug- und Druckkräfte im Bereich der Befestiger eine in sich stabile Konstruktion nach Art von Fachwerkträgern bilden, wobei, als Befestiger Schrauben eingesetzt sind, welche zumindest an ihren beiden Endbereichen in die vorgehängten Wandteile und in den Unterbau eingreifende Gewindeabschnitte aufweisen.

Bei einem bekannten Verfahren zum Befestigen von Holzkonstruktionsteilen vor einer Betonwand oder Mauer (DE19705202B4) werden Latten, Paneele od.dgl. mit Abstand von der Wand mittels Justierschrauben gehalten, welche in vorgebohrte Löcher im Unterbau und in den Holzkonstruktionsteilen eingesetzt sind. Mittels solcher Distanzschrauben ist auch eine Nivellierung der zu befestigenden Holzkonstruktionsteile gegenüber dem Unterbau möglich. Die Justierschrauben sind insgesamt auf Biegung beansprucht, so dass eine komplette Abstützung der Holzkonstruktionsteile nach unten hin erforderlich ist.

Femer ist eine Außenwand bekannt (DE19703874C2), die aus einer Holzwand, einer auf der Außenseite der Holzwand angebrachten Dämmschicht und einer Fassadenbekleidung besteht. Die Fassadenbekleidung ist an einer Konterlattung befestigt, welche über schräg nach oben weisend eingedrehte Verbindungsschrauben an der Holzwand befestigt sind. Diese Verbindungsschrauben weisen ein über die ganze Schaftlänge reichendes Gewinde auf und sind einen Winkel zwischen 60° und 80° mit der Horizontalen bildend eingeschraubt. Diese Verbindungsschrauben sind dadurch auf Zug und Biegung belastet, wobei bei einer entsprechend schweren Fassadenbekleidung die Möglichkeit besteht, dass die Verbindungsschrauben abgebogen werden und damit die Dämmschicht weiter zusammengepresst wird, es sei denn, dass diese Konterlattung nach unten hin zusätzlich komplett abgestützt wird oder ab er die Wärmedämmung muss über eine genügende Druckfestigkeit verfügen.

Ferner ist eine Schraube zum Einsatz bei einem Unterdach und ein entsprechendes Unterdach bekannt (DE29607265U1 oder EP0448915A1) bekannt, wobei die Schrauben sowohl in der Konterlattung als auch bei den Dachsparren durch Gewindeabschnitte fest verankert sind. Es entsteht dadurch eine starre Verstrebung zwischen Konterlattung und Sparren, welcher auch hoher Schneedruck nichts anhaben kann. Solche Konstruktionen sind aber ausschließlich im Bereich von Dächern einzusetzen, da hier hauptsächlich die vertikale Belastung durch den Schneedruck zu berücksichtigen lst. Dies kann durch mehrere auf Zug bzw. auf Druck zu beanspruchende Schrauben erreicht werden.

Eine bekannter Wandaufbau der eingangs genannten Art (DE29805784U1) werden horizontal oder in einem spitzen Winkel zur Horizontalen in den Unterbau Befestiger eingedreht. Dabei wird eine Konterlattung an den Unterbau einschließlich einer eventuell auf diesem angeordneten alten Außenverkleidung angepresst, was durch die verschiedene Gewindesteigung noch unterstützt wird. Da die Konterlattung nicht beabstandet vom Unterbau gehalten werden muss, ergeben sich hier keine Probleme mit Zug- und Druckkräften oder Biegemomenten auf die Schrauben.

Die vorliegende Erfindung hat sich daher zur Aufgabe gestellt, die Konstruktion stabiler zu gestalten.

Erfindungsgemäß gelingt dies dadurch, dass die Befestiger, die spitzwinklig zu einer Horizontalebene eingesetzt sind, zumindest teilweise abwechselnd in entgegengesetzte Richtungen zu der Horizontalebene geneigt sind.

Fachwerkträger werden in der Regel nur zum Überbrücken von entfernt liegenden Abstützstellen eingesetzt, also in einer horizontalen oder in einer spitzwinklig zur Horizontalen verlaufenden Lage. Durch die Erfindung wird eine Art Fachwerkträger geschaffen, welcher in vertikaler Ausrichtung Teil einer Wand bildet. Durch die Außenfassadenelemente wird eine erhebliche vertikale Belastung in Richtung der vorgehängten Wandteile in Form von Latten, Brettern od.dgl. ausgeübt, wobei diese Belastung zum größten Teil in das eigentliche Wandelement, also den festen Unterbau übertragen werden muss. Durch entsprechende Anordnung der Befestiger wird durch die Erfindung erreicht, dass alle geeigneten Maßnahmen gegeben sind, um über Zug-und Druckkräfte im Bereich der Befestiger nach Art eines vertikal verlaufenden Fachwerkträgers auf das eigentliche Wandelement eine in sich stabile Konstruktion zu schaffen, ohne dass die gesamten Kräfte durch Abstützung der vorgehängten Wandteile nach unten hin aufgefangen werden müssen.

Die Lasten der Fassade, also der vorgehängten Wandteile und der Außenverkleidungselemente, und auch die Windbelastung werden somit punktuell über die eingesetzten Befestiger in die tragenden, eigentlichen Wandelemente eingeleitet. Infolge der punktuellen Befestigung mit wechselseitig schräg eingeschraubten Befestigern ergeben sich in der Dämmebene praktische keine Konstruktionsteile, welche den Wärmeschutz oder den Schallschutz negativ beeinflussen könnten.

Es sind zwar bei dem bekannten Wandaufbau (DE29805784U1) in einem zweiten Ausführungsbeispiel in entgegengesetzte Richtungen geneigte Schrauben vorgesehen, wobei sich die aufeinander folgend eingedrehten Schrauben bezogen auf eine Längsmittelebene der Latte nach entgegengesetzten Richtungen spitzwinklig neigen. Somit nehmen hier die Schrauben, die zur Längsmittelebene geneigt sind, eine Neigung in entgegengesetzter Richtung auf und nicht die Schrauben, welche in der Längsmittelebene liegen.

Ferner sind bei einem Wandaufbau nach der DE29516664U1 entgegengesetzt geneigte Befestiger vorhanden, allerdings sind diese Befestiger Stege einer komplexen Befestigungsanordnung und dem Fachmann wäre es nicht naheliegend, die Anordnung solcher Stege auf die Anordnung von Schrauben zu übertragen wie sie in der DE29805784U1 genutzt werden.

Bei einer besonderen Ausgestaltung ist vorgesehen, dass die Befestiger abwechselnd einen vom Unterbau nach oben und nach unten weisenden spitzen Winkel zu einer Horizontalebene einschließen, so dass jeweils aufeinander folgende Paare von Befestigern einen Winkel von gleich oder kleiner 90° miteinander einschließen. Damit wird eine klassische Form eines Fachwerkträgers geschaffen, wobei abwechselnd Befestiger auf Druck und auf Zug belastet sind.

Eine andere konstruktive Ausgestaltung des Wandaufbaues sieht vor, dass die Befestiger abwechselnd einen vom Unterbau nach oben oder nach unten weisenden spitzen Winkel zu einer Horizontalebene einschließen und in einer Horizontalebene liegen, so dass jeweils in vertikaler Richtung aufeinander folgende Paare von Befestigern einen spitzen Winkel gleich oder kleiner als 45° miteinander einschließen. Je nach der Aufeinanderfolge von auf diese Weise angeordneten Befestigern übertragen diese entsprechend die Druck- oder die Zugkräfte.

Bei einer Ausgestaltung ist vorgesehen, dass die Befestiger jeweils eines Fachwerkträgers in einer vertikalen Ebene ausgerichtet verlaufend eingesetzt sind. Die Befestiger liegen dann wohl in verschiedenen spitzen Winkeln zu Horizontalebenen oder teilweise in Horizontalebenen, aber es ist für die Befestiger jeweils eines Fachwerkträgers nur eine Vertikalebene vorhanden.

Dagegen ist auch eine andere vorteilhafte Konstruktion möglich, bei der die Befestiger jeweils paarweise oder aber in entgegengesetzt liegenden spitzen Winkeln zu einer Horizontalebene verlaufenden Richtungen in parallel mit geringem Abstand zueinander verlaufenden vertikalen Ebenen verlaufend eingesetzt sind. Es ist also jeder Fachwerkträger mit Befestigern in wenigstens zwei parallel zueinander verlaufenden Vertikalebenen versehen. Bei besonderen Belastungen, also beispielsweise bei schweren Außenverkleidungselementen, kann so eine noch intensivere Krafteinleitung von den vorgehängten Wandteilen in den festen Unterbau erfolgen.

Bei einer weiteren Ausführungsvariante ist vorgesehen, dass die Befestiger in spitzen Winkeln zu einer Horizontalebene oder in einer Horizontalebene liegend in zwei einen spitzen Winkel miteinander einschließenden Vertikalebenen eingedreht sind, wobei die beiden Vertikalebenen von den vorgehängten Wandteilen ausgehend in Richtung zum Unterbau divergieren oder konvergieren. Durch diese Varianten kann zusätzlich eine Abstützung in horizontaler Richtung parallel zum Unterbau erzielt werden, wobei dies insbesondere bei auftretenden starken Windbelastungen vorteilhaft sein kann. Auch bei solchen Belastungen in horizontaler Richtung parallel zum Unterbau werden die Zug- und Druckkräfte unmittelbar über die Befestiger von den vorgehängten Wandteilen in den Unterbau eingeleitet.

Wenn beispielsweise die vorgehängten Wandteile beim Eindrehen der Befestiger noch geringfügig gegen den Unterbau herangezogen werden sollen, wird vorgesehen, dass die an den beiden Endbereichen der Befestiger ausgebildeten Gewindeabschnitte eine unterschiedliche Gewindesteigung aufweisen.

Die einfachere Konstruktion ist aber dann gegeben, wenn die an den beiden Endbereichen der Befestiger ausgebildeten Gewindeabschnitte die gleiche Gewindesteigung aufweisen. Es ist dann auch nach einem ersten Ausrichten der vorgehängten Wandteile gewährleistet, dass auch nach dem endgültigen Eindrehen aller Befestiger die vorgehängten Wandteile exakt in vertikaler Ausrichtung und vor allem auch in exakter Anordnung zu den benachbarten vorgehängten Wandteilen liegen.

Eine weitere konstruktive Ausgestaltung beim Wandaufbau einzusetzenden Befestiger sieht vor, dass die Befestiger in Form von Schrauben einen Kopf mit einem Werkzeugangriff aufweisen, wobei der Außendurchmesser des Kopfes nur geringfügig größer ist als der Außendurchmesser des an diesen anschließenden Gewindeabschnittes. Damit ist zusätzlich gewährleistet, dass die in der Regel aus Latten, Brettern, Balken od.dgl. aus Holz bestehenden vorgehängten Wandteile sich beim Eindrehen der Befestiger nicht spalten und somit für eine ordnungsgemäße Halterung der Außenverkleidungselemente und für eine optimale Abstützung in Richtung Unterbau dienen können. Außerdem ist gewährleistet, dass der Kopf der Schraube immer versenkt in den vorgehängten Wandteilen liegt und daher die Montage der Außenverkleidungselemente nicht behindern kann.

Weitere erfindungsgemäße Merkmale und besondere Vorteile werden in der nachstehenden Beschreibung noch näher erläutert. Es zeigen:
- Fig.1: einen Vertikalschnitt durch einen Wandaufbau;
- Fig.2: einen Schnitt nach der Linie II-II in Fig 1;
- Fig.3: einen Vertikalschnitt durch eine andere Ausführungsform eines Wandaufbaues;
- Fig.4: einen Schnitt nach der Linie IV-IV in Fig. 3;
- Fig.5: einen Vertikalschnitt durch eine weitere Ausführungsform eines Wandaufbaues;
- Fig.6: einen Schnitt nach der Linie VI-VI in Fig. 5;
- Fig.7: einen Vertikalschnitt Durch einen Wandaufbau
- Fig.8: einen Schnitt nach der Linie VIII-VIII in Fig. 7;
- Fig.9: einen Vertikalschnitt durch einen Wandaufbau
- Fig.10: einen Schnitt nach der Linie X-X in Fig. 9;
- Fig.11: einen Vertikalschnitt durch eine andere, spezielle Ausführungsform eines Wandaufbaues, welche auch bei den Ausgestaltungen nach den Fig. 1 bis 10 eingesetzt werden könnte;
- Fig.12: einen Schnitt nach der Linie XII-XII in Fig. 11;

- Fig.13: einen Vertikalschnitt durch eine andere, spezielle Ausführungsform eines Wandaufbaues, welche auch bei den Ausgestaltungen nach den Fig. 1 bis 10 eingesetzt werden könnte;
- Fig.14: einen Schnitt nach der Linie XIV-XIV in Fig. 13.

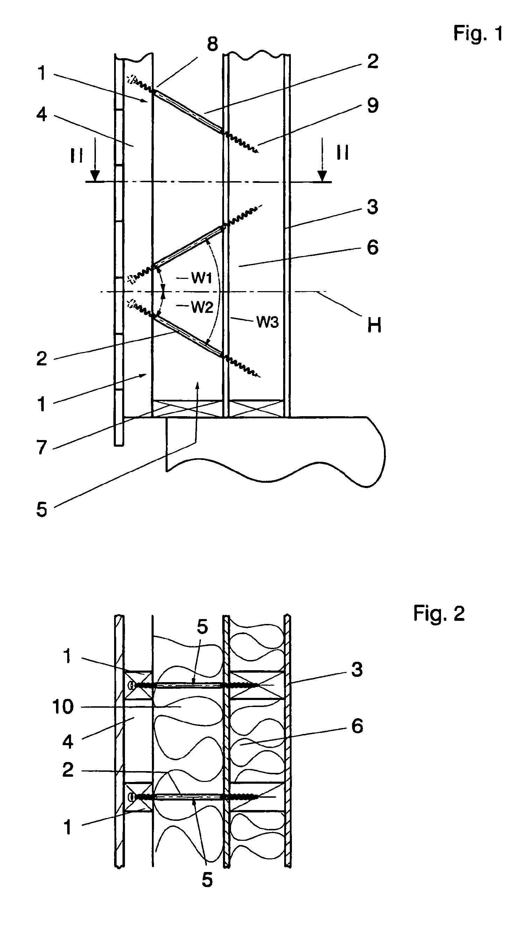

Bei einem Wandaufbau, wie er beispielsweise in den Fig. 1 und 2 gezeigt ist, werden bei einem Gebäude vorgehängte Wandteile 1 in Form von Latten, Brettern od.dgl. über Befestiger 2 mit dem festen, das eigentliche Wandelement bildenden Unterbau 3 verbunden. An den vorgehängten Wandteilen 1 sind dann Außenverkleidungselemente 4 in den verschiedensten Ausführungsvarianten befestigbar. Wenigstens ein Teil der Befestiger 2 sind in einem spitzen Winkel W1 bzw. W2 zu einer Horizontalebene H eingesetzt. Zumindest teilweise sind die Befestiger 2 abwechselnd in entgegengesetzte Richtungen zu der Horizontalebene H geneigt, wobei dadurch die vorgehängten Wandteile 1 in Form von Latten, Brettern od.dgl. zusammen mit den Befestigern 2 und zusammen mit dem Unterbau 3 jeweils eine Art Fachwerkträger 5 bilden.

Beim speziellen Beispiel nach den Fig. 1 und 2 schließen die Befestiger 2 abwechselnd einen vom Unterbau 3 nach oben und nach unten weisenden spitzen Winkel zu der Horizontalebene H ein, so dass jeweils aufeinanderfolgende Paare von Befestigern 2 einen Winkel W3 von gleich oder kleiner 90° miteinander einschließen.

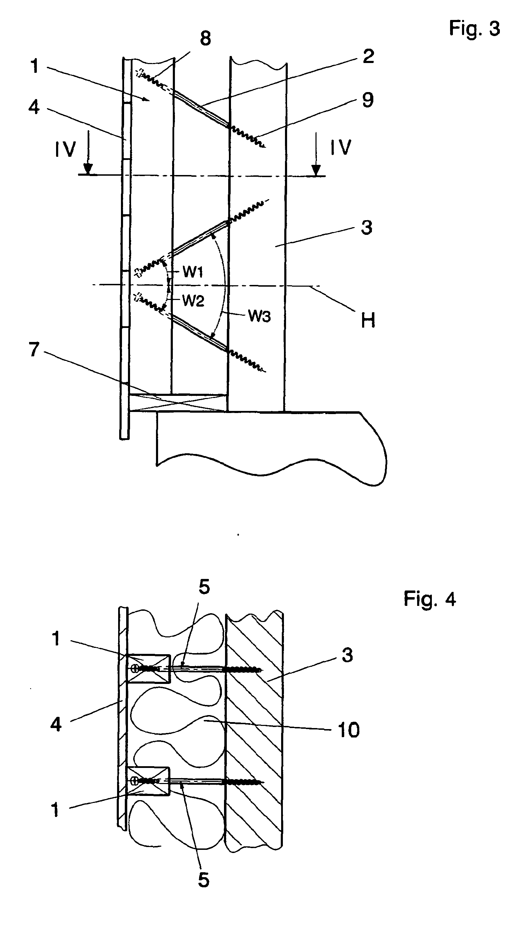

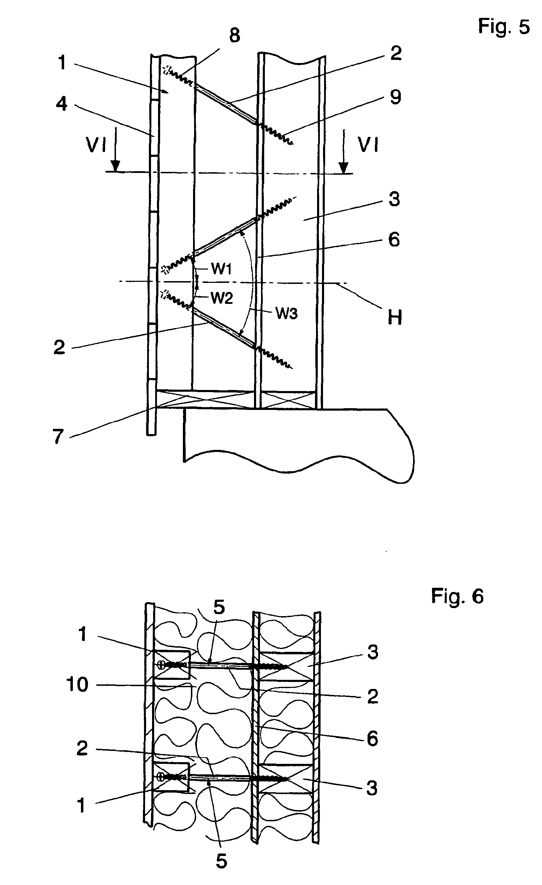

Einen an sich gleichen konstruktiven Aufbau weisen auch die Beispiele nach den Fig. 3 und 4 sowie 5 und 6 auf. Unterschiedlich sind lediglich die beim Unterbau 3 oder bei den vorgehängten Wandteilen 1 eingesetzten Materialien.

Beim Unterbau 3 können Holz- oder Holzwerkstoffe, z.B. Massivholz (z.B. Bohlen), Brettschichtholz, Brettsperrholz. Brettstapel, Spanplatten, LVL (Furnierstreifenholz), OSB (Grobspanplatte) oder MDF (mitteldichte Faserplatte) usw. oder auch andere Werkstoffe, wie Ziegel, Backstein, Beton usw. eingesetzt werden. Es können auch immer Bauteile oder Kombinationen dieser Materialien sein. Der Unterbau 3 kann auch noch mit einer Beplankung 6 aus OSB (Grobspanplatte), MDF (mitteldichte Faserplatte), Spanplatten, Holzfaserplatten usw. versehen sein Die vorgehängten Wandteile 1 können aus Latten, Brettern, Balken, Schnittholz, Brettschichtholz, KVH (Konstruktionsvollholz) usw. bestehen. Die Außenverkleidungselemente können aus verschiedensten Materialien bestehen. Es können z.B. diverse Formen, wie Stülpschalungen, Schirmschalungen, Schindeln aus den diversesten Werkstoffen, wie Holz, Blech, Schiefer, Naturstein, Metall usw. eingesetzt werden. Als Außenwandelemente können auch Putzträgerplatten vorgesehen sein.

Der Unterbau kann also zur Bildung der tragenden Wandkonstruktion als Ständerbau, Tafelbau, Riegelbau oder eben als massive Wand ausgeführt sein. Es wird immer eine optimale Festigkeit der vorgehängten Wandteile 1 durch das Zusammenwirken mit den Befestigern 2 und der speziellen Anordnung derselben und somit der Bildung von entsprechenden Fachwerkträgern geschaffen. Durch die erfindungsgemäße Ausgestaltung ist eine untere Abstützung 7 für die vorgehängten Wandteile 1 nicht erforderlich, da die Ableitung der Kräfte praktisch ausschließlich in den Unterbau, und zwar über die ganze Höhe des Wandaufbaues erfolgt. Die Abstützung 7 dient daher im Wesentlichen nur zu einem Abschluss des Freiraumes zwischen dem Unterbau 3 und den vorgehängten Wandteilen 1 bzw. den Außenverkleidungselementen.

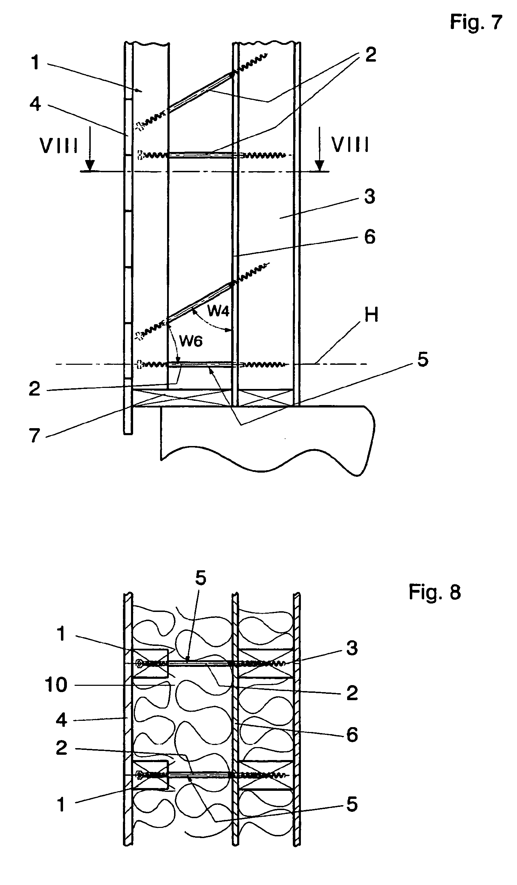

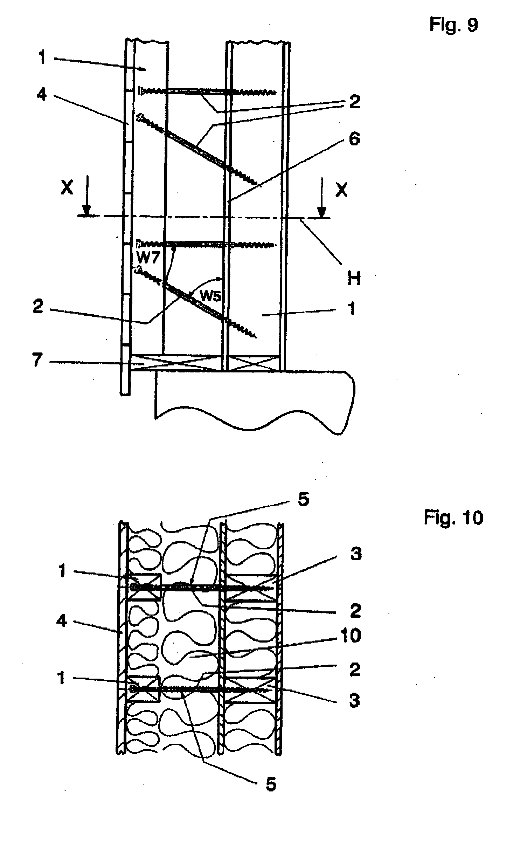

In den Fig. 7 und 8 sowie 9 und 10 ist ein Wandaufbau gezeigt, bei welchem, anders als in einem Wandaufbau nach Anspruch 1, die Befestiger 2 abwechselnd einen vom Unterbau 3 nach oben (Fig.9) oder nach unten (Fig.7) weisenden spitzen Winkel W5 bzw. W4 zu einer Horizontalebene H einschließen und in einer Horizontalebene H liegen, so dass jeweils in vertikaler Richtung aufeinander folgende Paare von Befestigern 2 einen spitzen Whkel W6 bzw. W7 gleich oder kleiner als 45° miteinander einschließen. Auch hier ist eine Krafteinleitung von den vorgehängten Wandteilen 1 über die Befestiger 2 in den Unterbau 3 gewährleistet, wobei die einen Befestiger Druckkräfte und die anderen Befestiger die Zugkräfte übertragen.

Aus den Zeichnungen ist ersichtlich, dass bei den Ausführungen nach den Fig. 1 bis 10 die Befestiger 2 jeweils eines Fachwerkträgers 5 in einer vertikalen Ebene ausgerichtet verlaufend eingesetzt sind.

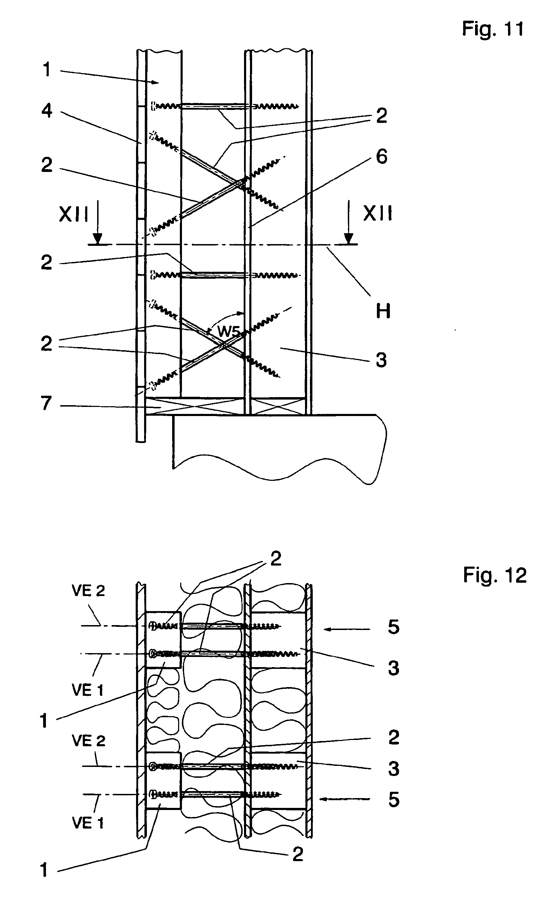

Bei der besonderen Ausgestaltung nach den Fig. 11 und 12 ist ein Wandaufbau gezeigt, bei welchem die Befestiger 2 jeweils paarweise oder aber in entgegengesetzt liegenden spitzen Winkeln W5 zu einer Horizontalebene H verlaufenden Richtungen in parallel mit geringem Abstand zueinander verlaufenden vertikalen Ebenen VE1 und VE2 verlaufend eingesetzt sind. Auf diese Weise können auch sich kreuzende Befestiger 2 eingesetzt werden oder auch nur jeweils paarweise sich kreuzende Befesiger 2, von denen dann jeweils der eine in der Vertikalebene VE1 und der andere in der Vertikaleebene VE2 liegt. Dadurch kann eine noch zusätzliche Verstärkung der einzelnen Fachwerkträger 5 geschaffen werden.

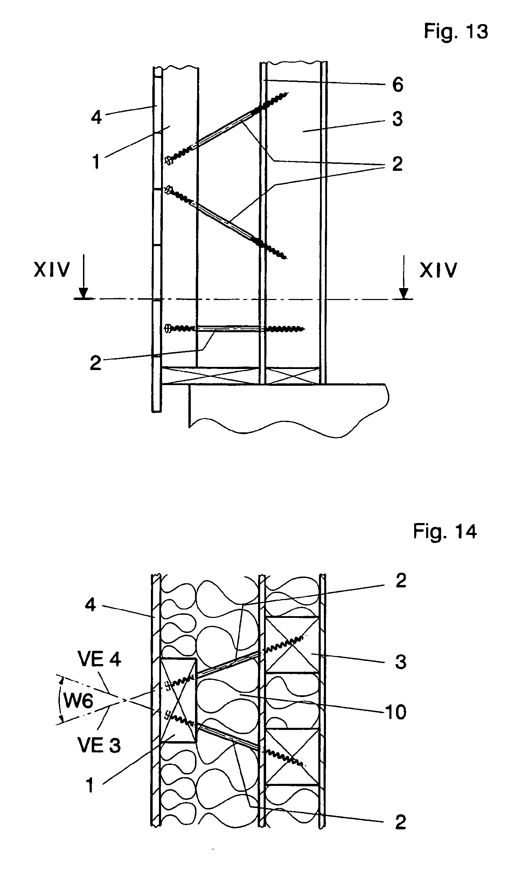

Aus den Fig. 13 und 14 ist ein Wandaufbau ersichtlich, bei welchem die Befestiger in spitzen Winkeln zu einer Horizontalebene oder in einer Horizontalebene liegend in zwei einen spitzen Winkel W6 miteinander einschließenden Vertikalebenen VE3,VE4 eingedreht sind. Dadurch ergibt sich eine zusätzliche Möglichkeit, auch horizontal und parallel zum Wandaufbau auftretende Kräfte in den Unterbau einzuleiten. Die beiden Vertikalebenen VE3,VE4 divergieren oder konvergieren von den vorgehängten Wandteilen 1 ausgehend in Richtung zum Unterbau 3. Je nach konstruktiver Gestaltung und den zu erwartenden Kräften kann die Konstruktion entsprechend angepasst werden. Somit werden auch solche Kräfte über die Befestiger 2 in den Unterbau 3 abgeleitet, wobei die Befestiger die erforderlichen Zug- oder Druckkräfte übertragen.

Beim Wandaufbau werden vorteilhaft als Befestiger 2 Schrauben eingesetzt, welche zumindest an ihren beiden Endbereichen einen Gewindeabschnitt 8 bzw. 9 aufweisen. Die an den beiden Endbereichen der Befestiger 2 ausgebildeten Gewindeabschnitte 8 bzw. 9 können eine unterschiedliche Gewindesteigung aufweisen. Es ist aber konstruktiv und auch verarbeitungsmäßig vorteilhafter, wenn die an den beiden Endbereichen der Befestiger 2 ausgebildeten Gewindeabschnitte 8 bzw. 9 die gleiche Gewindesteigung aufweisen.

In der Regel können die Befestiger in Form von Schrauben ohne Vorbohren eines Loches eingesetzt werden, so dass eine wesentliche Arbeitsersparnis erzielbar ist. Wenn jedoch der Unterbau 3 aus Ziegeln oder Beton besteht, muss wohl vorgebohrt werden, weil dann im Unterbau 3 ein Dübel eingesetzt werden muss.

Die Befestiger 2 in Form von Schrauben weisen einen Kopf mit einem Werkzeugangriff auf, wobei der Außendurchmesser des Kopfes nur geringfügig größer ist als der Außendurchmesser des an diesen anschließenden Gewindeabschnittes 8. Dadurch kann der Schraubenkopf beim Eindrehen in die vorgehängten Wandteile 1 versenkt angeordnet werden.

Beim Wandaufbau können, wie aus allen Ausführungsbeispielen ersichtlich ist, zwischen den einzelnen vertikal verlaufenden Fachwerkträgern 5 Dämmplatten oder-matten 10 eingesetzt sein, welche im Wesentlichen zur Wärme- und/oder Schalldämmung dienen. Diese Dämmplatten oder-matten 10 können aber auch durchgehend ausgebildet sein, weil die Verschraubung der vorgehängten Wandteile 1 auch nach dem Auslegen oder Anheften der Dämmplatten oder-matten erfolgen kann.

## Patentansprüche

1. Wandaufbau für ein Gebäude, wobei beidem Wandaufbaw vorgehängte Wandteile derart abwechsdud angeordnet sindidass ersk Befestiger in Form von Latten, Brettern od.dgl. über Befestiger (2) mit dem festen, das eigentliche Wandelement bildenden Unterbau (3) verbunden sind und wobei an den vorgehängten Wandteilen derart abwechsdud angeorduet sind, dass ersk Befestiger Außenverkleidungselemente (4) befestigbar sind, wobei wenigstens ein Teil der Befestiger (2) spitzwinklig zu einer Horizontalebene (H) eingesetzt sind, wobei die vorgehängten Wandteile (1) zusammen mit den Befestigern (2) und zusammen mit dem Unterbau (3) jeweils über Zug- und Druckkräfte im Bereich der Befestiger (2) eine in sich stabile Konstruktion nach Art von Fachwerkträgern (5) bilden, wobei als Befestiger (2) Schrauben eingesetzt sind, welche zumindest an ihren beiden Endbereichen in die vorgehängten Wandteile (1) und in den Unterbau (3) eingreifende Gewindeabschnitte (8,9) aufweisen, **dadurch gekennzeichnet, dass** die Befestiger (2), die spitzwinklig zu einer Horizontalebene (H) eingesetzt sind, zumindest teilwelse abwechselnd in entgegengesetzte Richtungen zu der Horizontalebene (H) geneigt sind.

2. Wandaufbau nach Anspruch 1, **dadurch gekennzeichnet, dass** die Befestiger (2) abwechselnd einen vom Unterbau (3) nach oben und nach unten weisenden spitzen Winkel (W1,W2) zu einer Horizontalebene (H) einschließen, so dass jeweils aufeinander folgende Paare von Befestigern (2) einen Winkel (W3) von gleich oder kleiner 90° miteinander einschließen.

3. Wandaufbau nach Anspruch 1, **dadurch gekennzeichnet, dass** die Befestiger (2) derart abwechsdud angeorduet sind, dass ersk Befestiger abwechselnd einen vom Unterbau (3) nach oben oder nach unten weisenden spitzen Winkel (W4 oder W5) zu einer Horizontalebene (H) einschließen und zweik Befestiger einer Horizontalebene (H) liegen, so dass jeweils in vertikaler Richtung aufeinander folgende Paare von Befestigem (2) einen spitzen Winkel (W7) gleich oder kleiner als 45° miteinander einschließen.

4. Wandaufbau nach den Ansprüchen 1 bis 3, **dadurch gekennzeichnet, dass** die Befestiger (2) jeweils eines Fachwerkträgers (5) in einer vertikalen Ebene ausgerichtet verlaufend eingesetzt sind.

5. Wandaufbau nach den Ansprüchen 1 bis 3, **dadurch gekennzeichnet, dass** die Befestiger (2) jeweils paarweise oder aber in entgegengesetzt liegenden spitzen Winkeln zu einer Horizontalebene (H) verlaufenden Richtungen, in parallel mit geringem Abstand zueinander verlaufenden vertikalen Ebenen (VE1, VE2) verlaufend eingesetzt sind.

6. Wandaufbau nach den Ansprüchen 1 bis 3, **dadurch gekennzeichnet, dass** die Befestiger (2) in spitzen Winkeln zu einer Horizontalebene (H) oder in einer Horizontalebene (H) liegend in zwei einen spitzen Winkel (W6) miteinander einschließenden Vertikalebenen (VE3,VE4) eingedreht sind, wobei die beiden Vertikalebenen (VE3,VE4) von den vorgehängten Wandteilen (1) ausgehend in Richtung zum Unterbau divergieren oder konvergieren.

7. Wandaufbau nach Anspruch 1, **dadurch gekennzeichnet, dass** die an den beiden Endbereichen der Befestiger (2) ausgebildeten Gewindeabschnitte (8,9) eine unterschiedliche Gewindesteigung aufweisen.

8. Wandaufbau nach Anspruch 1, **dadurch gekennzeichnet, dass** die an den beiden Endbereichen der Befestiger (2) ausgebildeten Gewindeabschnitte (8,9) die gleiche Gewindesteigung aufweisen.

9. Wandaufbau nach Anspruch 1, **dadurch gekennzeichnet, dass** die Befestiger (2) in Form von Schrauben einen Kopf mit einem Werkzeugangriff aufweisen, wobei der Außendurchmesser des Kopfes nur geringfügig größer ist als der Außendurchmesser des an diesen anschließenden Gewindeabschnittes (8).

## Claims

1. A wall structure for a building, wherein in the wall structure pre-hung wall parts (1) in the form of battens, boards or the like are connected via fasteners (2) to the solid substructure (3) forming the actual wall element, and wherein exterior cladding elements (4) can be mounted on the pre-hung wall parts (1), wherein at least some of the fasteners (2) are inserted at an acute angle relative to a horizontal plane (H), wherein the pre-hung wall parts (1) together with the fasteners (2) and together with the substructure (3) each form via tensile and compression forces in the vicinity of the fasteners (2) an inherently stable structure in the manner of truss girders, wherein screws are used as fasteners (2) which at least at their two end zones have threaded sections (8,9) engaging in the pre-hung wall parts (1) and in the substructure (3), **characterised in that** the fasteners (2), which are inserted at an acute angle relative to a horizontal plane (H), are inclined at least partly alternating in opposite directions relative to the horizontal plane (H).

2. A wall structure according to Claim 1, **characterised in that** the fasteners (2) alternately form an acute angle (W1,W2) extending upwards and downwards from the substructure (3) relative to a horizontal plane (H) so that respective successive pairs of fasteners (2) form with one another an angle (W3) which is equal to or smaller than 90°.

3. A wall structure according to Claim 1, **characterised in that** the fasteners (2) are so arranged alternately that first fasteners alternately form an acute angle (W4 or W5) extending upwards or downwards from the substructure (3 relative to a horizontal plane (H)), and second fasteners lie in a horizontal plane (H) so that respective pairs of fasteners (2) succeeding one another in a vertical direction form an acute angle (W7) equal to or smaller than 45°.

4. A wall structure according to Claims 1 to 3, **characterised in that** the fasteners (2) of a respective truss girder (5) are inserted aligned extending in a vertical plane.

5. A wall structure according to Claims 1 to 3, **characterised in that** the fasteners (2) are inserted respectively in pairs or in oppositely disposed directions extending at acute angles relative to a horizontal plane (H), in vertical planes (VE1,VE2) extending parallel to and at a small distance from one other.

6. A wall structure according to Claims 1 to 3, **characterised in that** the fasteners (2) are screwed in at acute angles relative to a horizontal plane (H) or in a horizontal plane (H) lying in two vertical planes (VE3,VE4) forming an acute angle (W6) with one another, wherein the two vertical planes (VE3,VE4) diverge or converge, starting from the pre-hung wall parts (1), in the direction of the substructure.

7. A wall structure according to Claim 1, **characterised in that** the threaded sections (8,9) formed at the two end zones of the fasteners (2) have a different thread pitch.

8. A wall structure according to Claim 1, **characterised in that** the threaded sections (8,9) formed at the two end zones of the fasteners (2) have the same thread pitch.

9. A wall structure according to Claim 1, **characterised in that** the fasteners (2) in the form of screws have a head with a tool-engaging socket, wherein the outer diameter of the head is only slightly larger than the outer diameter of the threaded section (8) adjacent thereto.

## Revendications

1. Structure de mur pour des bâtiments, dans laquelle des éléments de murs suspendus (1) réalisés sous la forme de lattes, de planches ou similaires sont reliés, par des éléments de fixation (2) avec la structure de base (3) fixe formant l'élément de paroi proprement dit, des éléments de revêtement externes (4) pouvant être fixés sur les éléments de paroi suspendus (1), au moins une partie des éléments de fixation (2) étant insérés en délimitant un angle aigu avec un plan horizontal (H), les éléments de murs suspendus formant avec les éléments de fixation (2) et avec la structure de base (3) une construction stable en elle-même de type poutre en treillis (5) vis-à-vis des forces de traction et de compression dans la zone des éléments de fixation (2), ces éléments de fixation (2) étant constitués par des vis, comportant, au moins au niveau de leurs deux extrémités des tronçons filetés (8, 9) venant en prise dans les éléments de paroi suspendus (1) et dans la structure de base (3),
**caractérisée en ce que**
les éléments de fixation (2) insérés suivant un angle aigu par rapport à un plan horizontal (H) sont au moins partiellement alternativement inclinés dans des directions opposées par rapport à ce plan horizontal (H).

2. Structure de mur conforme à la revendication 1,
**caractérisée en ce que**
les éléments de fixation (2) délimitent alternativement, avec un plan horizontal (H) un angle aigu (W1, W2) orienté vers le haut et vers le bas à partir de la structure de base (3) de sorte que des paires successives respectives d'éléments de fixation (2) délimitent entre-elles un angle (W3) supérieur ou égal à 90%.

3. Structure de mur conforme à la revendication 1,
**caractérisée en ce que**
les éléments de fixation (2) sont alternativement positionnés de sorte que des premiers éléments de fixation délimitent alternativement avec un plan horizontal (H) un angle aigu (W4 ou W5) orienté vers le haut ou vers le bas à partir de la structure de base (3) et que des seconds éléments de fixation soient situés dans un plan horizontal (H) de façon telle que des paires d'éléments de fixation (2) se succédant respectivement en direction verticale délimitent entre-elles un angle aigu (W7) égal ou inférieur à 45%.

4. Structure de mur conforme aux revendications 1 à 3,
**caractérisée en ce que**
les éléments de fixation (2) d'une poutre en treillis (5) respective, sont insérés en étant orientés dans un plan vertical.

5. Structure de mur conforme aux revendications 1 à 3,
**caractérisée en ce que**
les éléments de fixation (2) sont insérés dans des plans verticaux parallèles (VE1, VE2) situés à faible distance par paires respectives ou cependant dans des directions orientées en délimitant des angles aigus situés à l'opposé avec un plan horizontal (H).

6. Structure de mur conforme aux revendications 1 à 3,
**caractérisée en ce que**
les éléments de fixation (2) sont vissés dans deux plans verticaux (VE3, VE4) délimitant un angle aigu (W6), ce en délimitant des angles aigus avec un plan horizontal (H) ou en étant situés dans un tel plan horizontal (H), les deux plans verticaux (VE3, VE4) divergeant ou convergeant à partir des éléments de paroi suspendus (1) en direction de la structure de base.

7. Structure de mur conforme à la revendication 1,
**caractérisée en ce que**
les parties filetées (8, 9) formées aux deux extrémités des éléments de fixation (2) ont des pas différents.

8. Structure de mur conforme à la revendication 1,
**caractérisée en ce que**
les parties filetées (8, 9) formées aux deux extrémités des éléments de fixation (2) ont le même pas.

9. Structure de mur conforme à la revendication 1,
**caractérisée en ce que**
les éléments de fixation (2) en forme de vis, comportent une tête avec un élément de mise en prise d'un outil, le diamètre externe de cette tête n'étant que supérieur au diamètre de la partie filetée (8) s'y raccordant.
